# EUROPÄISCHE PATENTSCHRIFT

(11) **EP 0 339 405 B1**
(45) Veröffentlichungstag und Bekanntmachung des Hinweises auf die Patenterteilung: **15.12.1993**
(21) Anmeldenummer: 89106763.9
(22) Anmeldetag: 15.04.1989
(51) Int. Cl.: H02B 1/28, H02B 1/04

(54) **Gehäuse mit einem Gehäuseunterteil und einem Gehäuseoberteil**
Casing with an upper and a lower part
Boîtier comportant une partie supérieure et une partie inférieure

(30) Priorität: 23.04.1988 DE 8805421 U
(43) Veröffentlichungstag der Anmeldung: 02.11.1989
(73) Patentinhaber: Asea Brown Boveri Aktiengesellschaft, 68309 Mannheim (DE)
(72) Erfinder: Schwarz, Gerhard, D-6936 Allemühl (DE); Magin, Andreas, D-6934 Neckargerach (DE)
(74) Vertreter: Rupprecht, Klaus, Dipl.-Ing.

(56) Entgegenhaltungen:
- EP-A- 0 208 129
- DE-A- 2 027 157
- DE-A- 3 113 679

## Beschreibung

Die Erfindung betrifft ein Gehäuse nach dem Oberbegriff des Anspruches 1.

Gehäuse der eingangs genannten Art, die zur Aufnahme von elektrischen Installationsgeräten dienen, sind dann, wenn sie explosionsgeschützt ausgeführt sind, dazu geeignet, nicht explosionsgeschützte Installationsgeräte aufzunehmen und zu haltern. Damit die Installationsgeräte im Inneren des Gehäuses befestigt werden können, sind hutprofilartige Anformungen vorgesehen, wie z. B. aus der DE-A 35 23 328 oder EP-A 0 208 129 bekannt, sowie Stromsammelschienen und Anschlußklemmen. Ein Sammelschienenträger, der hierbei Verwendung finden kann und auf dem sowohl die Sammelschiene als auch ein Installationsgerät aufgeschnappt werden können, ist aus der DE-OS 376 34 804.3 bekannt geworden. Dieser Sammelschienenträger besitzt eine Grundplatte, an der eine Hutprofiltragschiene angeformt ist und die außerdem Halter trägt, an denen die Sammelschiene gehaltert ist.

Die Herstellung dieses Sammelschienenträgers ist relativ kompliziert, da er ein einstückiges Teil mit vielen Einzelabschnitten ist.

Aufgabe der Erfindung ist es, ein Gehäuse der eingangs genannten Art zu schaffen, das leicht montierbar ist und in das die einzelnen Installationsgeräte leicht einbaubar sind.

Diese Aufgabe wird erfindungsgemäß durch die kennzeichnenden Merkmale des Anspruches 1 gelöst.

Damit die Bodenplatte am Boden des Gehäuseunterteils befestigt werden kann, befindet sich bei einer Ausgestaltung der Erfindung in besonders vorteilhafter Weise an der tragarmfreien Seite der Bodenplatte ein bewegbarer Schieber mit einer beweglichen Nase an wenigstens einer Seite, der mit einer festen Nase zum Hintergreifen der Ausformungen zusammenwirkt. Dabei können in zweckmäßiger Weise zwei Schieberführungen vorgesehen sein, die um 90° versetzt sind, so daß der Schieber an zwei Stellen an der Bodenplatte anbringbar ist.

Aus der DE-A 20 27 157 ist ein Verbindungsteil zum Befestigen eines elektrischen Installationsgerätes an einer Tragschiene bekannt geworden, welches Verbindungsteil eine rechteckige Grundplatte aufweist, auf deren einer Seite Schenkel angeformt sind, an denen das Installationsgerät fixierbar ist. Auf der anderen Seite, der Unterseite, der Grundplatte sind eine feste und eine bewegbare Nase angeformt, wobei die bewegbare Nase nicht als Schieber, sondern als an der Grundplatte angeformter federnder Steg ausgebildet ist.

Schieber, mit denen ein Installationsgerät an einer Hutprofiltragschiene befestigt werden können, sind beispielsweise aus der DD-PS 157 132 bekannt geworden. Wie allgemein üblich, befindet sich der bekannte Schieber am Boden eines Gehäuses eines elektrischen Installationsgerätes, nicht aber eines Trägers zur Halterung eines solchen Gerätes innerhalb eines speziellen Gehäuses.

Bei einer weiteren Ausgestaltung der Erfindung besteht in besonders vorteilhafter Weise jedes Gerüst aus parallel zueinander verlaufenden, L-förmigen Pfosten, deren L-Schenkel parallel zur Bodenplatte und parallel zueiander verlaufen, wobei die L-Schenkel eines Gerüstes jeweils in die entgegengesetzte Richtung der L-förmigen Schenkel des anderen Gerüstes weisen; die freien Enden der L-Schenkel sind mittels eines Querträgers miteinander verbunden und an den Querträgern schließen je zwei in spitzem Winkel zu den L-Schenkeln verlaufende Stützen an, die wiederum an der Tragplatte anschließen. Je ein Rastarm ist zwischen je zwei einem Gerüst zugehörigen Stützen an der Bodenplatte angeformt.

Die Rastvorsprünge, mit denen die Tragplatte festgeschnappt werden kann, sind als an der Tragplatte angeformte L-förmige Vorsprünge ausgebildet, deren freier Schenkel je eine Rastnase an je einem Rastarm hintergreifen.

Weitere vorteilhafte Ausgestaltungen und Verbesserungen der Erfindung sind den Ansprüchen 6 und 7 zu entnehmen. Aufgrund der Lochreihen einerseits und der U-förmigen Bügel andererseits wird eine leichte und einfach zu montierende Verdrahtung der Installationsgeräte möglich.

Jedes Gehäuse kann in bevorzugter Weise in wenigstens einer Unterteilseitenwand mittels eines Deckels verschließbarer Ausnehmung aufweisen.

Dabei können mehrere Gehäuse zu Mehrfachgehäusen zusammenfügbar sein, dergestalt, daß die Ausnehmungen in den sich gegenüberliegenden Wandungen der einander anschließenden Gehäuse vorgesehen sind, und zwischen den Gehäusen ist jeweils ein der Kontur der Ausnehmung angepaßter, diese umgebender Ring vorgesehen, der auf beiden axial entgegengesetzt liegenden Seiten je eine Rille mit darin aufgenommener Dichtung aufweist.

Weitere vorteilhafte Ausgestaltungen und Verbesserungen der Erfindung sind den weiteren Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Figur 1: eine Einsicht in ein erfindungsgemäßes Gehäuse in perspektivischer Darstellung,
- Figur 2: eine perspektivische Darstellung einer Bodenplatte mit zwei Gerüsten,
- Figur 3: eine Schnittansicht gemäß der Schnittlinie III-III,
- Figur 4: eine Schnittansicht durch ein Gehäuseoberteil,
- Figur 5: eine Schnittansicht durch zwei nebeneinander liegende Gehäuseunterteile und
- Figur 6: eine perspektivische Darstellung eines zwischen den beiden Gehäuseteilen der Figur 5 angeordneten Ringes.

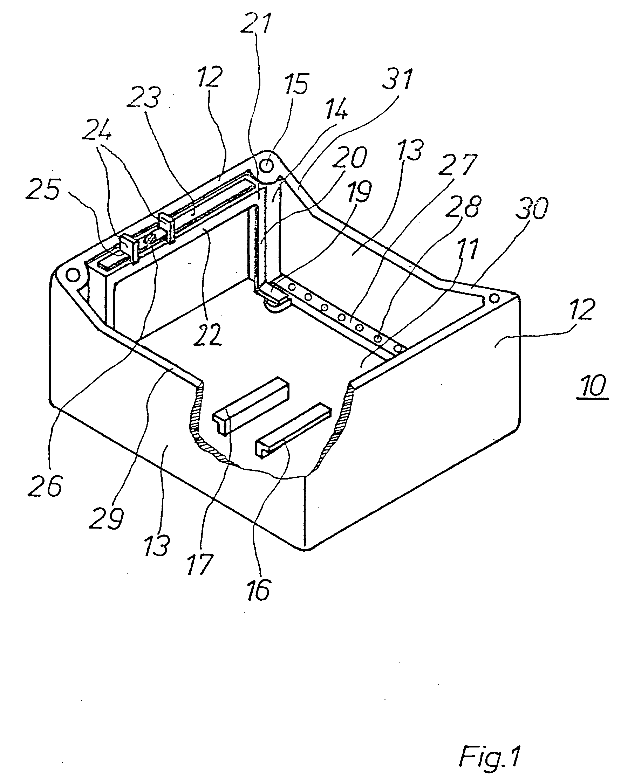

Die Figur 1 zeigt eine Einsicht in ein erfindungsgemäßes Gehäuseunterteil. Das Gehäuseunterteil 10 besitzt einen Gehäuseboden 11 sowie Seitenwände 12 und 13, wobei in den Ecken zwischen den Gehäuseseitenwänden Augen 14 mit Bohrungen 15 vorgesehen sind. Am Gehäuseboden befinden sich zwei parallel zueinander verlaufende L-förmige Ausformungen 16 und 17, die miteinander eine Normprofiltragschiene in Hutform bilden. Die beiden Ausformungen 16 und 17 verlaufen parallel zu den beiden Wänden 12 und senkrecht zu den Seitenwänden 13.

Im Bereich der Augen 14 befinden sich augenförmige Absätze 18, auf denen jeweils ein an den freien Enden der Schenkel 20 eines U-förmigen Bügels 21 angeordneter Fuß 19 aufsteht und darauf befestigt ist. Der Steg 22 des Bügels 21 trägt auf seiner Oberseite eine Stromsammelschiene 23, wobei an der Außenfläche des Steges U-förmige Zwischenstege 24 angeformt sind, von denen in Figur 1 nur zwei zu sehen sind; die Zwischenstege 24 bilden mit dem Steg 22 je eine Durchgangsöffnung 25, durch die die Stromsammelschiene 3 hindurchgreift bzw. hindurchgeführt ist; in die Stromsammelschiene 23 sind Klemmschrauben 26 eingeschraubt.

An der Innenseite der Wände 13 befinden sich im Bereich des Bodens Leisten 27, in denen mehrere Bohrungen 28 eingebracht sind, an denen beispielsweise nicht näher dargestellte Tragschienen befestigt werden können.

Die Endkanten der Seitenwände 13 verlaufen nicht parallel zu der Bodenfläche des Gehäuses 10, sondern besitzen einen Bereich 29 mit geringerem Abstand zum Boden, der über jeweils eine schräg verlaufende Kante 30 bzw. 31 zu den Wänden 12 hin ansteigt.

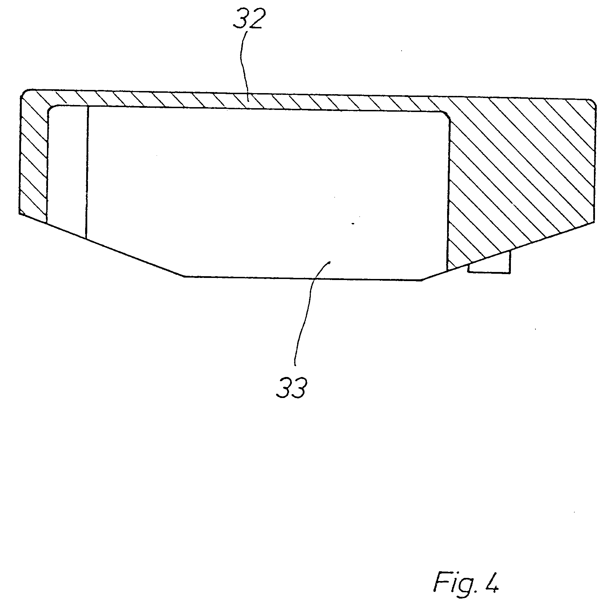

An dem Gehäuseunterteil ist ein Gehäuseoberteil 32 (Fig. 4) befestigbar, dessen Kontur der Umfangskontur des Gehäuseunterteils 10 entspricht; die Seitenwände 33, die auf den Kanten 29, 30, 31 aufliegen, sind in entsprechender Weise geformt, so daß sie sich der Form der Kanten 29 bis 31 anschließen.

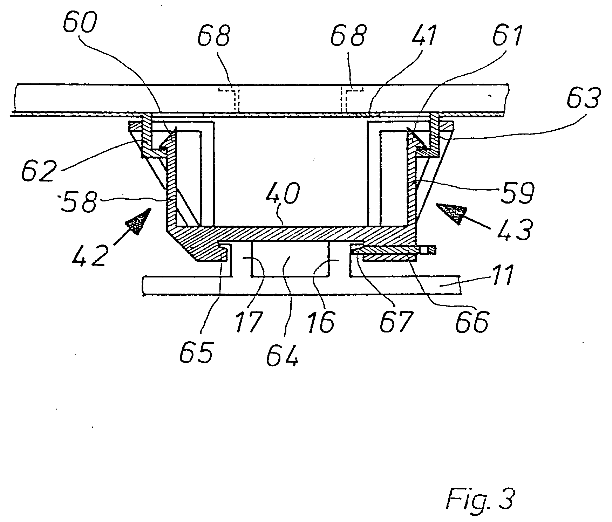

Auf die L-förmigen Ausformungen 16, 17 kann eine Bodenplatte 40 aufgeschnappt werden (s. auch Figur 3), auf der eine Tragplatte 41 aufgerastet werden kann (s. ebenfalls Figur 3).

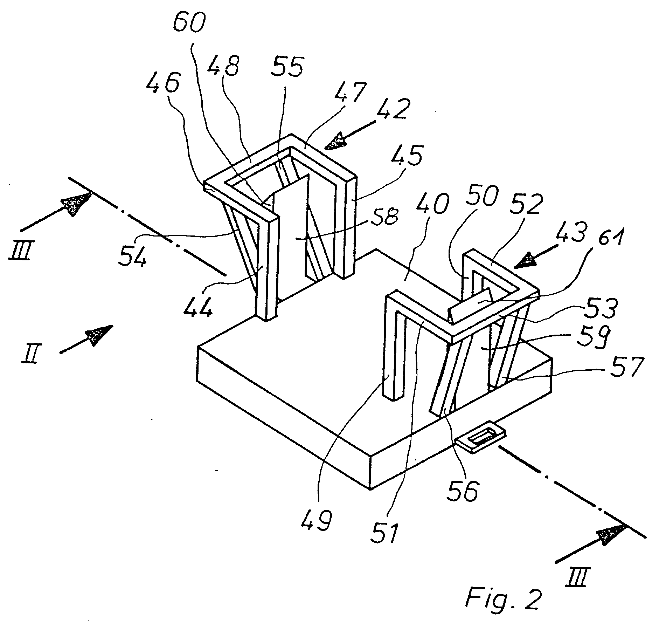

Auf der in der Figur 2 von oben zu sehenden Seite der Bodenplatte 40 ist an den sich gegenüberliegenden Seitenkanten je ein Gerüst 42 und 43 angeformt, auf dem die Tragplatte 41 aufliegt. Die beiden Gerüste 42 und 43 sind spiegelbildlich gleich. Das Gerüst 42 ist gebildet aus zwei senkrecht zur Bodenplatte 40 und parallel zueinander zu verlaufenden Pfosten 44 und 45, an deren von der Bodenplatte entfernt liegendem Ende je ein Schenkel 46 und 47 anschließt, so daß die Schenkel 46 bzw. 47 mit den Pfosten 44 bzw. 45 je eine L-Form bilden. Die freien Enden der Schenkel 47 und 46 sind mittels eines Querträgers 49 miteinander verbunden.

Das Gerüst 43 besitzt ebenfalls zwei Pfosten 49 und 50, an denen Schenkel 51 und 52 anschließen; diese Schenkel 51 und 52 fluchten mit den Schenkeln 46 und 47; die Schenkel 46 und 51 und die Schenkel 47 und 52 weisen jeweils in die entgegengesetzte Richtungen. Die freien Enden der Schenkel 51 und 52 sind mit einem Querträger 53 verbunden. Von den Querträgern 48 bzw. 53 aus verlaufen unter einem spitzen Winkel zu den Schenkeln 46 und 47 bzw. 51 und 52 Stützen 54 und 55 bzw. 56 und 57 zu der Bodenplatte 40 hin, an der sie angeformt sind bzw. an der sie anschließen. Die Stützen 54 bis 57 befinden sich innerhalb der Schenkel 46 und 47 bzw. der Pfosten 44 und 45 sowie 51 und 52 und 49 und 50; von der Seite, also in Pfeilrichtung II gesehen, bilden die Pfosten mit den Schenkeln und den Stützen jeweils ein Dreieck. Zwischen den Stützen befinden sich Rastarme 58 und 59, deren freien Enden je eine Rastnase 60 tragen, die nach außen - von der Bodenplatte 40 aus gesehen - gerichtet sind. In der Figur 3 erkennt man die Bodenplatte 40, die Rastarme 58 bzw. 59 mit der Rastnase 60 bzw. 61. An der Tragplatte 41 sind L-förmige Rastvorsprünge 62 und 63 angeformt, die hinter die Rastnasen 60 und 61 im aufgeschnappten Zustand greifen.

Die Bodenplatte besitzt auf der Seite, die den Gerüsten 42 und 43 entgegengesetzt liegt, eine Vertiefung 64, mit einer festen Nase 65 und einer an einem Schieber 66 angeformten bewegbaren Nase 67, die hinter die Anformungen 17 und 16 an der Innenfläche des Gehäuseunterteilbodens 11 geschnappt werden können. Die Tragplatte 41 besitzt im Querschnitt eine ebenfalls hut-profilartige Anformung, die in Figur 3 strichliert mit den Linien 68 dargestellt ist.

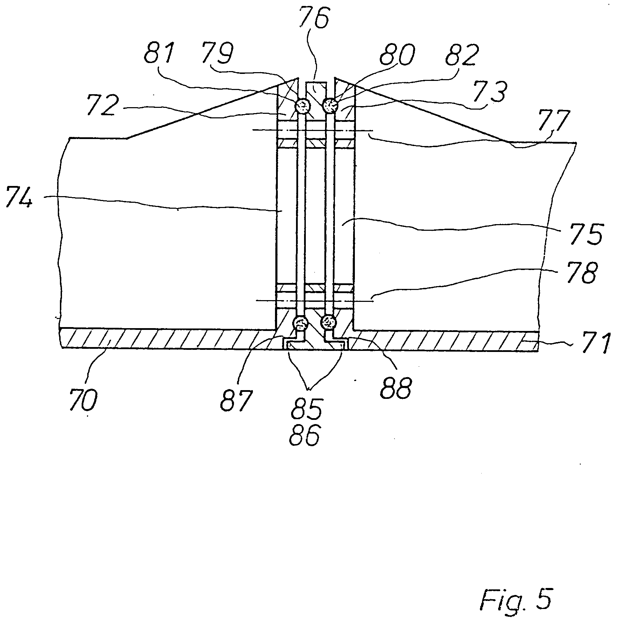

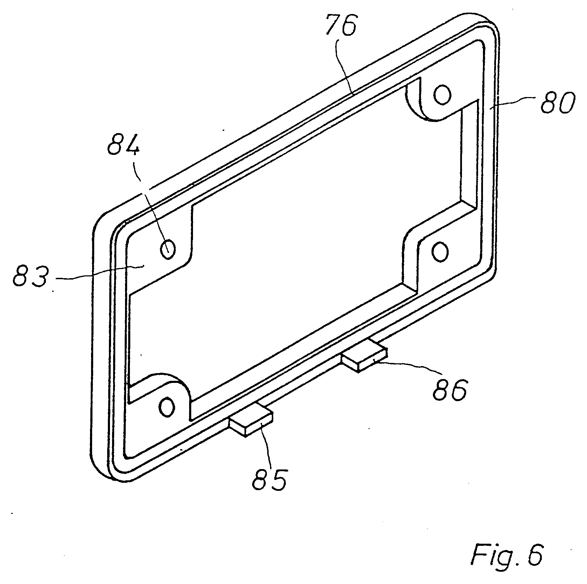

Die Figur 5 zeigt eine Teilschnittansicht zweier nebeneinander angeordneter Gehäuseunterteile 70 und 71. In den Seitenwänden 72 und 73, die den Seitenwänden 12 entsprechen, befinden sich rechteckförmige Ausnehmungen 74 und 75 und zwischen den beiden Gehäusen ist ein Ring 76 mittels Schraubverbindungen 77 und 78 befestigt (siehe Figur 6).

Der Ring ist rechteckförmig und umgibt die Innenkontur der Ausnehmungen 74 und 75. Beidseitig auf den sich entgegengesetzten Ringseiten ist je eine umlaufende Rille 79 und 80 angeformt bzw. eingelassen, in die je eine Ringdichtung 81 und 82 eingesetzt ist, die zur Abdichtung der Gehäuseinnenräume nach außen dienen. In den Ecken der Innenkontur des Ringes 76 befinden sich nach innen vorspringende Augen 83 mit Bohrungen 84, durch die die Schraubverbindungen 77 und 78 hindurchgreifen. An einer der beiden Längskanten des Ringes sind jeweils eine T-Form bildende Vorsprünge 85 und 86 vorgesehen, die in entsprechende Rücksprünge 87 und 88 eingreifen und dadurch der Zentrierung des Ringes 76 dienen.

## Patentansprüche

1. Gehäuse mit einem Gehäuseunterteil (10) und einem Gehäuseoberteil (32), mit am Gehäuseboden (11) angeordneten, zusammen eine Hutprofilschiene bildenden Ausformungen (16, 17), dadurch gekennzeichnet, daß ein Träger zur Befestigung einer Tragplatte (41) zur Halterung von elektrischen Installationsgeräten vorgesehen ist, daß der Träger eine Bodenplatte (40) aufweist, an deren einen Fläche Mittel (65; 66, 67) zum Aufschnappen auf die Ausformungen (16, 17) und zum Hintergreifen der Ausformungen (16, 17) angeordnet sind und von deren anderer Fläche federnde Tragarme (44, 45; 49, 50) vorspringen, die zwei Gerüste (42, 43) mit jeweils mindestens einem parallel zur Bodenplatte (40) verlaufenden Gerüstarm (46, 47) bilden, auf deren der Bodenplatte (40) entgegengesetzten Armseiten die Tragplatte (41) im montierten Zustand aufliegt, und daß zusätzlich von der Bodenplatte (40) auf der die Tragarme (44, 45; 49, 50) tragenden Fläche zwei Rastarme (58, 59) mit Rastnasen (60, 61) vorspringen, hinter die an der Tragplatte (41) angeformte Rastvorsprünge (62, 63) einrastbar sind.

2. Gehäuse nach Anspruch 1, dadurch gekennzeichnet, daß die Mittel (65, 66, 67) ein bewegbarer Schieber (66) mit einer bewegbaren Nase (67) im Bereich wenigstens einer Kante angebracht ist, der mit einer Nase (65) zusammenwirkt, die beide zum Hintergreifen der Anformungen (17, 16) dienen.

3. Gehäuse nach Anspruch 2, dadurch gekennzeichnet, daß zwei um 90° versetzte Schieberführungen zur Aufnahme des Schiebers (61) an der Bodenplatte (40) vorhanden sind, und daß zwei damit zusammenwirkende feste Nasen, ebenfalls um 90° versetzt, an der Bodenplatte (40) angeformt sind.

4. Gehäuse nach einem der vorherigen Ansprüche, dadurch gekennzeichnet, daß jedes Gerüst (42, 43) senkrecht auf der Bodenplatte (40) aufstehende, parallel zueinander verlaufende Pfosten (44, 45; 49, 50) und daran anschließende parallel zur Bodenplatte (40) und mit den Pfosten ein L bildende Schenkel (46, 47; 51, 52) aufweist, daß die Schenkel (46, 47) eines Gerüstes (42) mit den entsprechenden Schenkeln (51, 52) des anderen Gerüstes (43) fluchten und die miteinander fluchtenden Schenkel (46, 51; 47, 52) voneinander wegweisen, daß die freien Enden der Schenkel (46, 47; 51, 52) jedes Gerüstes (42, 43) mittels je eines Querträgers (48, 53) miteinander verbunden sind, daß an den Querträgern (48, 53) zwei in einem spitzen Winkel zu den Schenkeln (46, 47; 51, 52) verlaufende Stützen (54, 55/56, 57) angeformt sind, die mit ihren Enden an der Bodenplatte (40) anschließen, und daß je ein Rastarm (58, 59) zwischen je einem Gerüst (42, 43) zugehörigen Pfosten (44, 45; 49, 50) an der Bodenplatte (40) angeformt ist.

5. Gehäuse nach Anspruch 4, dadurch gekennzeichnet, daß die Rastvorsprünge (62, 63) als an der Tragplatte (41) angeformte L-förmige Vorsprünge ausgebildet sind, deren freie Schenkel jeweils eine Rastnase (60, 61) an einem Rastarm (58, 59) hintergreifen.

6. Gehäuse nach einem oder mehreren der vorherigen Ansprüche, dadurch gekennzeichnet, daß vorzugsweise im Bereich der senkrecht zu den befestigungsschienenartigen Ausformungen (16, 17) ausgerichteten Gehäusewänden 813) je eine Lochreihe (27, 28) zur Befestigung von wenigstens einer Tragschiene vorgesehen ist.

7. Gehäuse nach einem der vorherigen Ansprüche, dadurch gekennzeichnet, daß im Bereich der parallel zu den Ausformungen (16, 17) verlaufenden Wandungen (12) des Gehäuseunterteils (10) je ein U-förmiger Bügel (21) mit seinen Schenkelenden (20) am Boden befestigbar ist, dessen Steg (22) eine Stromsammelschiene (23) mit daran angebrachten Klemmschrauben (26) zum Festklemmen von Leiteranschlüssen trägt.

8. Gehäuse nach einem der vorherigen Ansprüche, dadurch gekennzeichnet, daß in wenigstens einer Unterteilseitenwand (72, 73) eine mittels eines Deckels verschließbare Ausnehmung (74, 75) vorgesehen ist.

9. Gehäuse, das mit mindestens einem weiteren, gleich ausgebildeten Gehäuse zu einem mindestens Doppelgehäuse zusammengefügt ist, nach Anspruch 8, dadurch gekennzeichnet, daß die Ausnehmung (74, 75) in den sich gegenüberliegenden Wandungen (42, 43) der beiden Gehäuse vorgesehen ist und daß dazwischen ein der Kontur der Ausnehmungen (74, 75) angepaßter, diese umgebender Ring (76) vorgesehen ist, der auf beiden axial entgegengesetzt liegenden Seiten je eine Rille (79, 80) mit darin aufgenommener Dichtung (81, 82) aufweist.

10. Gehäuse nach Anspruch 9, dadurch gekennzeichnet, daß der Ring (76) auf jeder Seite mindestens einen Führungsvorsprung (85/86) aufweist, die im montierten Zustand in darin angepaßte Rücksprünge (87, 88) in den daran anschließenden Gehäuseunterteilen (70, 71) eingreifen.

## Claims

1. Housing having a housing bottom part (10) and a housing top part (32) and having form-out mouldings (16, 17) which are disposed on the housing base (11) and together form a hat-profiled rail, characterised in that a carrier is provided for the fastening of a supporting plate (41) for holding electrical installation appliances, in that the carrier exhibits a baseplate (40), on the one face of which there are disposed means (65; 66, 67) for snapping onto the form-out mouldings (16, 17) and for back-gripping the form-out mouldings (16, 17) and from the other face of which there project resilient supporting arms (44, 45; 49, 50), which form two supporting frames (42, 43) having respectively at least one supporting frame arm (46, 47) running parallel to the baseplate (40), upon whose arm sides opposite the baseplate (40) the supporting plate (41) bears in the fitted state, and in that additionally, from the baseplate (40) on the face supporting the supporting arms (44, 45; 49, 50), there project two latching arms (58, 59) having latching bosses (60, 61), behind which the latching projections (62, 63) formed onto the supporting plate (41) can be latch-locked.

2. Housing according to Claim 1, characterised in that the means (65, 66, 67) [sic] a movable slide (66) having a movable boss (67) is fitted in the region of at least one edge, which slide interacts with a boss (65), which both serve to back-grip the form-on [sic] mouldings (17, 16).

3. Housing according to Claim 2, characterised in that two slide runners, offset by 90°, for the reception of the slide (61) are present on the baseplate (40) and in that two therewith interacting fixed bosses, likewise offset by 90°, are formed onto the baseplate (40).

4. Housing according to one of the preceding claims, characterised in that each supporting frame (42, 43) exhibits poles (44, 45; 49, 50), which stand vertically erect on the baseplate (40) and run parallel to one another, and thereto adjoining legs (46, 47; 51, 52), which run parallel to the baseplate (40) and form an L with the poles, in that the legs (46, 47) of a supporting frame (42) are in alignment with the corresponding legs (51, 52) of the other supporting frame (43) and the mutually aligned legs (46, 51; 47, 52) point away from one another, in that the free ends of the legs (46, 47; 51, 52) of each supporting frame (42, 43) are interconnected by means of a respective transverse support (48, 53), in that formed onto the transverse supports (48, 53) are two stanchions (54, 55/56, 57), which run at an acute angle to the legs (46, 47; 51, 52) and are adjoined by their ends to the baseplate (40), and in that a respective latching arm (58, 59) is formed onto the baseplate (40) between poles (44, 45; 49, 50) forming part of a respective supporting frame (42, 43).

5. Housing according to Claim 4, characterised in that the latching projections (62, 63) are configured as L-shaped projections formed onto the supporting plate (41), the free legs of the projections respectively back-gripping a latching boss (60, 61) on a latching arm (58, 59).

6. Housing according to one or more of the preceding claims, characterised in that, preferably in the region of the housing walls 813) [sic] aligned perpendicularly to the fastening rail-like form-out mouldings (16, 17), there is provided a respective row of holes (27, 28) for the fastening of at least one mounting rail.

7. Housing according to one of the preceding claims, characterised in that in the region of the walls (12) running parallel to the form-out mouldings (16, 17) and belonging to the housing bottom part (10), a respective U-shaped bow (21) can be fastened by its legs ends (20) to the base, the crosspiece (22) of which supports a bus-bar (23) with thereto fitted clamping screws (26) for the clamping of conductor connections.

8. Housing according to one of the preceding claims, characterised in that in at least one bottom part side wall (72, 73) there is provided a recess (74, 75) which can be closed off by means of a cover.

9. Housing which is joined together with at least one further, identically configured housing to form an at least double housing, according to Claim 8, characterised in that the recess (74, 75) is provided in the opposing walls (42, 43) of the two housings and in that between the housings there is provided a ring (76) which is matched to the contour of the recesses (74, 75) and surrounds these and exhibits, on the two axially opposite sides, a respective groove (79, 80) with a therein received seal (81, 82).

10. Housing according to Claim 9, characterised in that the ring (76) exhibits on each side at least one guide projection (85/86), which guide projections, in the fitted state, engage in therein [sic] matched cavities (87, 88) in the thereto adjoining housing bottom parts (70, 71).

## Revendications

1. Boîtier comprenant une partie inférieure (10) et une partie supérieure (32), comprenant des structures (16, 17) disposées sur le fond du boîtier (11) et formant ensemble un profilé en chapeau, caractérisé par le fait qu'il est prévu un élément-support pour fixer une plaque-support (41) en vue du montage d'appareils d'installation électriques, que l'élément-support présente une plaque de fond (40), sur l'une des faces de laquelle sont disposés des moyens (65; 66, 67) destinés à être enfilés sur les structures (16, 17) et à s'engager derrière ces structures (16, 17), et sur l'autre face de laquelle s'élèvent des bras-supports (44, 45; 49, 50) élastiques qui forment deux châssis (42, 43) comportant chacun au moins un bras de châssis (46, 47) parallèle à la plaque de fond (40), sur les côtés, éloignés de la plaque de fond (40), desquels repose la plaque-support (41) à l'état monté, et que, depuis la plaque de fond (40), sur la surface portant les bras-supports (44, 45; 49, 50), s'élèvent en plus deux bras de verrouillage (58, 59) portant des ergots élastiques (60, 61) derrière lesquels peuvent s'enclencher les saillies de verrouillage (62, 63) de la plaque-support (41).

2. Boîtier selon la revendication 1, caractérisé par le fait que les moyens (65, 66, 67) sont constitués d'un élément mobile (66) comportant un mentonnet mobile (67) dans la région d'au moins un bord, qui coopère avec un mentonnet (65) afin de s'engager tous deux derrière les structures (16, 17).

3. Boîtier selon la revendication 2, caractérisé par le fait qu'il est prévu deux guides décalés de 90° et destinés à recevoir l'élément mobile (66) sur la plaque de fond (40), et que la plaque de fond (40) comporte deux ergots fixes, coopérant avec l'élément mobile et également décalés de 90°.

4. Boîtier selon l'une des revendications précédentes, caractérisé par le fait que chaque châssis (42, 43) présente des montants (44, 45; 49, 50), reposant perpendiculairement sur la plaque de fond (40) et parallèles les uns aux autres, ainsi que des branches (46, 47; 51, 52) reliées aux montants, parallèles à la plaque de fond (40) et formant un L avec les montants, que les branches (46, 47) d'un châssis (42) sont alignées avec les branches (51, 52) correspondantes de l'autre châssis (43) et les branches alignées (46, 51; 47, 52) sont orientées dans des directions opposées, que les extrémités libres des branches (46, 47; 51, 52) de chaque châssis (42, 43) sont reliées entre elles respectivement par une traverse (48, 53), que les traverses (48, 53) comportent deux pattes (54, 55/56, 57) formant un angle aigu avec les branches (46, 47; 51, 52) et reliées par leurs extrémités à la plaque de fond (40), et que la plaque de fond (40) comporte des bras de verrouillage (58, 59) disposés respectivement entre les montants (44, 45; 49, 50) de chaque châssis (42, 43).

5. Boîtier selon la revendication 4, caractérisé par le fait que les saillies de verrouillage (62, 63) sont agencées en forme de L sur la plaque-support (41), dont les branches libres s'engagent respectivement derrière un ergot (60, 61) d'un bras de verrouillage (58, 59)

6. Boîtier selon l'une ou plusieurs des revendications précédentes, caractérisé par le fait qu'il est prévu, de préférence dans la région des parois du boîtier (13) perpendiculaires aux structures (16, 17) en forme de rails de fixation, respectivement une rangée de trous (27, 28) pour fixer au moins un profilé-support.

7. Boîtier selon l'une des revendications précédentes, caractérisé par le fait que, dans la région des parois (12) parallèles aux structures (16, 17) de la partie inférieure (10) du boîtier, un étrier (21) en forme de U est fixé au fond respectivement par les extrémités de ses branches (20), la traverse (22) de cet étrier portant une barre collectrice de courant (23) avec des vis de serrage (26), en vue de la connexion de bornes de conducteurs.

8. Boîtier selon l'une des revendications précédentes, caractérisé par le fait que, dans au moins une paroi (72, 73) de la partie inférieure, il est prévu un évidement (74, 75) pouvant être fermé au moyen d'un couvercle.

9. Boîtier qui est réuni avec au moins un autre boîtier identique pour former un boîtier double, selon la revendication 8, caractérisé par le fait que l'évidement (74, 75) est prévu dans les parois (42, 43) situées en vis-à-vis des deux boîtiers, et qu'il est prévu entre ces parois une bague (76) qui est adaptée au contour des évidements (74, 75), entoure ceux-ci et présente, sur ses deux côtés axialement opposés, respectivement une gorge (79, 80) recevant un joint d'étanchéité (81, 82).

10. Boîtier selon la revendication 9, caractérisé par le fait que la bague (76) présente sur chaque côté au moins une saillie de guidage (85/86) qui, à l'état monté, s'engage dans des parties en retrait (87, 88) adaptées des parties inférieures de boîtier (70, 71) reliées.
